# EUROPÄISCHE PATENTANMELDUNG

(11) **EP 1 041 786 A2**
(43) Veröffentlichungstag der Anmeldung: **04.10.2000**
(21) Anmeldenummer: 00106177.9
(22) Anmeldetag: 21.03.2000
(51) Int. Cl.: H04L 27/156

(54) **Verfahren zur Demodulation von FSK-modulierten Signalen**

(30) Priorität: 31.03.1999 DE 19914694
(71) Anmelder: ABB PATENT GmbH, 68309 Mannheim (DE)
(72) Erfinder: Gräfe, Martin, Dr.-Ing., 58513 Lüdenscheid (DE)
(74) Vertreter: Miller, Toivo

(57) **Zusammenfassung**

Die Erfindung bezieht sich auf Verfahren zur Demodulation von mittels zweier Trägerfrequenzen (f1, f2) FSK-modulierten Signalen, im Rahmen eines Systems zur Übertragung von Datentelegrammen (Bit-Sequenzen) über Leitungen eines Niederspannungsnetzes, z. B. 230-V-Netzes.

Um eine erhöhte Robustheit gegen Störsignale zu erreichen, wird vorgeschlagen, außer dem üblichen Vergleich von gebildeten Korrelatorwerten (K1, K2) miteinander, zusätzlich einen Vergleich der Korrelatorwerte (K1, K2) jeweils mit einem wählbaren Schwellwert (S) durchzuführen. Dabei entstehende Bitströme (DB1, DB2, DB3) werden auf charakteristische Telegramm-Merkmale untersucht und derjenige Bitstrom, dessen Charakteristik die beste Übereinstimmung mit der erwarteten Charakteristik aufweist, wird als empfangener Datenbitstrom (D) einer weiteren Auswertung zugeführt oder ausgegeben.

## Beschreibung

Die Erfindung bezieht sich auf ein Verfahren zur Demodulation FSK-modulierter Signale.

Das Verfahren ist insbesondere geeignet zur Demodulation von Empfangssignalen bei der Datenübertragung auf dem Niederspannungsnetz, z. B. 230-V-Netz, und dabei besonders bei einer Übertragung unter Anwendung der Bandspreiztechnik (SFSK = Spread Frequency Shift Keying).

Die FSK- und die SFSK-Technik sind allgemein bekannt und beispielsweise in R. Rosch, K. Dostert, K. Lehmann, R. Zapp "Gebäudesystemtechnik", Verlag Moderne Industrie, Landsberg/Lech, insbes. Seiten 18 bis 40, beschrieben. In diesem Fachbuch sind auch besondere, durch vielfältige Störungen auf dem Übertragungskanal bedingte Probleme der Datenübertragung sowie ein Powerline-Übertragungssystem der Firma Busch-Jaeger Elektro, Lüdenscheid einschließlich der benutzten Telegrammstruktur mit z. B. Präambel und Prüfsumme (s. S. 45) beschrieben.

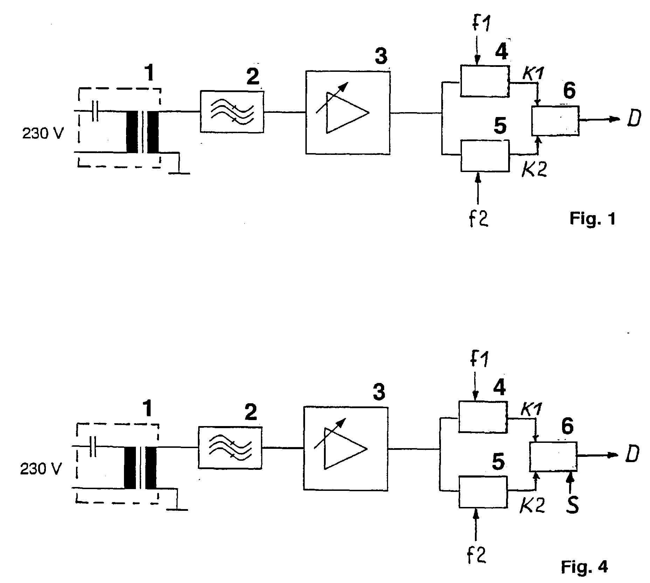

Das Empfängerprinzip des vorgenannten, bekannten Powerline-Übertragungssystems im Fall einer Zweiträger-Frequenzumtastung ist in Fig. 1 dargestellt. Dabei sind Mittel 1 zur Signalauskopplung vorhanden, denen ein Bandpaß 2 und ein Verstärker 3 mit Verstärkungsregelung nachgeschaltet sind zur analogen Signalaufbereitung. Daran schließt sich eine korrelative Auswertung mittels Korrelatoren 4, 5 an, wobei Korrelatorwerte K1 und K2 für die beiden Trägerfrequenzen f1 und f2 gebildet werden. Durch Vergleich der Korrelatorwerte K1 und K2 in einem Vergleicher 6 wird eine Bitentscheidung getroffen und ein Datenbitstrom D ausgegeben. Für den Fall, daß dem Nutzsignal weißes Rauschen überlagert ist, wird mit einer solchen Empfangseinrichtung eine hohe Störsicherheit erreicht.

In der Praxis erweist sich jedoch die Annahme, der typische Störbelag auf dem 230-V-Lichtnetz sei annähernd durch weißes Rauschen zu beschreiben, häufig als unzutreffend. Vielmehr ist das Störspektrum meistens durch einzelne schmalbandige Störer gekennzeichnet, die von elektronischen Transformatoren, Schaltnetzteilen und ähnlichen Lasten verursacht werden.

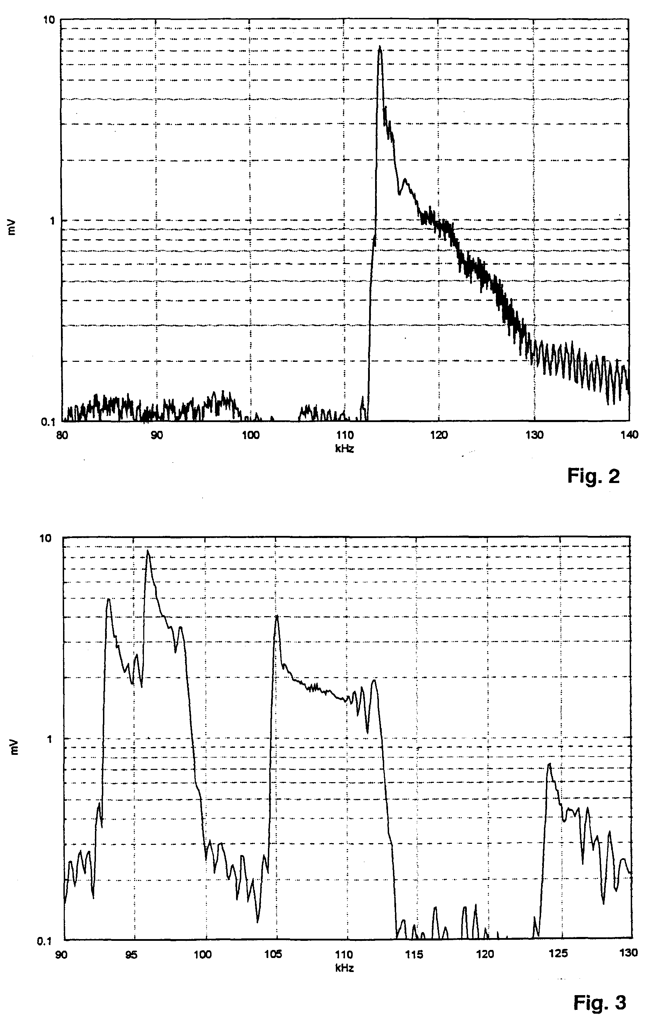

Fig. 2 zeigt beispielhaft ein von einem elektronischen Transformator erzeugtes Störspektrum (Störspannung als Funktion der Frequenz). Ein anderes Beispiel zeigt Fig. 3, wobei das Störspektrum einer Kombination von Energieleuchten dargestellt ist.

Wird bei der vorbeschriebenen Übertragung mit zwei Trägerfrequenzen eine der beiden Trägerfrequenzen von einem Störer der beispielhaft in den Fig. 2 und 3 dargestellten Art überlagert, so führt die Bitentscheidung mit Hilfe des Größenvergleichs der beiden Korrelatorwerte K1 und K2 mit hoher Wahrscheinlichkeit zu einem falschen Ergebnis, d. h. es kommt zum Datenverlust, obwohl eine der Trägerfrequenzen ungestört empfangen wird.

Der Erfindung liegt daher die Aufgabe zugrunde, ein Verfahren zur FSK-Demodulation anzugeben, mit dem eine erhöhte Robustheit gegen Störsignale erreicht wird.

Diese Aufgabe wird durch ein Demodulationsverfahren mit den im Anspruch 1 angegebenen Merkmalen gelöst.

Bei diesem Verfahren werden durch Vergleich der Korrelatorwerte mit einem festen Schwellwert drei Bitströme erzeugt, deren charakteristische Telegramm-Merkmale, wie Präambel und Prüfsumme untersucht werden. Der Bitstrom, dessen Charakteristik die beste Übereinstimmung mit der erwarteten Charakteristik aufweist, wird als empfangener Datenbitstrom genutzt.

Die so erreichbare Verbesserung der Robustheit ist um so größer, je größer der Abstand der beiden Trägerfrequenzen ist; damit eignet sich das Verfahren besonders für die Signalübertragung mit Bandspreiztechnik (SFSK). Praktische Versuche haben gezeigt, daß die Empfangsempfindlichkeit des Systems durch die Anwendung dieses Verfahrens um 10 dB und mehr gesteigert werden kann.

Eine Beschreibung der Erfindung erfolgt nachstehend anhand der Zeichnungsfiguren.

Es zeigen:
- Fig. 1: das Empfängerprinzip eines bekannten Übertragungssystems,
- Fig. 2 und 3: Beispiele typischer Störspektren auf Niederspannungsleitungen,
- Fig. 4: das erfindungsgemäße Empfängerprinzip,
- Fig. 5: Korrelatorwerte-Verläufe, und
- Fig. 6: Sende- und Empfangssequenzen.

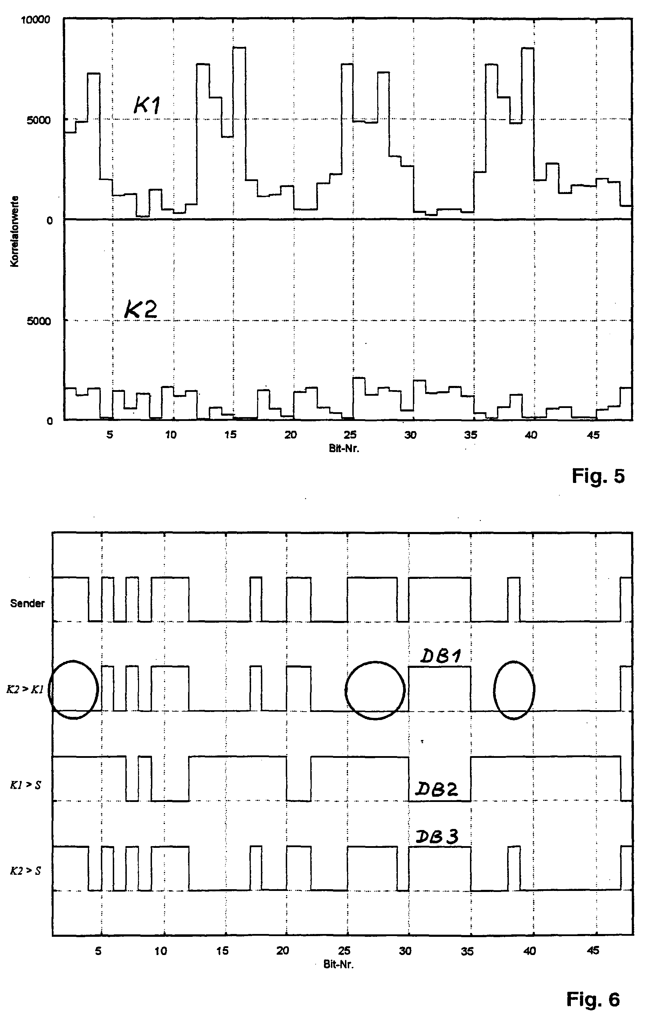

Fig. 4 zeigt ein Empfängerprinzip, das weitgehend mit den in Fig. 1 gezeigten und oben bereits beschriebenen Empfängerfunktionen übereinstimmt, wobei jedoch erfindungsgemäß ein Schwellwert S zusätzlich im Vergleicher 6 herangezogen wird.

Die neue Arbeitsweise des Vergleichers 6 wird nachstehend anhand der Darstellung von beispielhaften Verläufen der Korrelatorwerte K1, K2 in Fig. 5 und der Darstellung von Sende- und Empfangssequenzen in Fig. 6 erläutert.

In Fig. 5 sind Korrelatorverläufe K1 und K2 als experimentelle Ergebnisse einer SFSK-Übertragung 1200 bps auf den üblichen Trägerfrequenzen 105, 6 kHz und 115, 2 kHz gezeigt. Bei diesem Versuch wurde das aus einer 48 Bit langen Zufallssequenz erzeugte Signal abgeschwächt und mit dem von einer Kombination aus Energiesparlampen verursachten Störspektrum, das in Fig. 3 dargestellt ist, überlagert.

In Fig. 5 ist für diesen Fall der resultierende Verlauf der Korrelatorwerte K1 und K2, also der jeweilige Korrelatorwert je Bit aufgetragen. Es ist zu erkennen, daß K1 (105, 6 kHz) von einer netzsynchronen Störung überlagert ist, deren Amplitude diejenige des Nutzsignals deutlich übersteigt. Der K2-Verlauf ist dagegen ungestört.

In Fig. 6 sind für den vorgenannten Fall Sende- und Empfangssequenzen dargestellt. Dabei ist in der oberen Zeile die Sendesequenz gezeichnet, darunter ein erster Datenbitstrom DB1, der sich durch Vergleich der Korrelatorwerte K1 und K2 ("K2>K1") ergibt. Kreise weisen auf Fehlerstellen hin, nämlich acht Bitfehler gegenüber der gesendeten Sequenz ("Sender"). Darunter ist als zweiter Datenbitstrom DB2 das Ergebnis eines Vergleichs des Korrelatorwerts K1 mit einem vorgegebenen festen Schwellwert S ("K1>S"), hier z. B. der Schwellwert S = 1000, gezeigt. Auch dieser zweite Datenbitstrom DB2 ist fehlerhaft. Dagegen liefert der Vergleich des Korrelatorwerts K2 mit dem Schwellwert S ("K2>S") trotz der Störung während der Übertragung den fehlerfreien Datenbitstrom DB 3. Dieser wird im Vergleicher als solcher erkannt, da Präambel und Prüfsumme korrekt sind. Der Datenbitstrom DB3 wird somit in diesem Beispiel ausgewählt und als Datenbitstrom D ausgegeben.

Zur Wahl des Schwellwertes S wird nachstehendes ausgeführt:
Aufgrund der großen Dämpfung, die bei der Signalübertragung auf dem 230V-Netz auftreten kann, sind solche Übertragungssysteme mit einer automatischen Verstärkungsregelung (AGC) ausgestattet. Diese stellt für die korrelative Auswertung einen festen Signalpegel bereit - weitestgehend unabhängig von der Amplitude des Eingangssignals. Damit ist für die Festlegung der Schwelle für die Einzeiträgerauswertung nicht der absolute Signalpegel, sondern nur das Verhältnis zwischen Nutz- und Gesamtsignal (mit Störung) relevant. Übersteigt der Störpegel den Pegel des Nutzsignals, wird der Gesamtsignalpegel im wesentlichen vom Störpegel bestimmt. Die vom Nutzsignal hervorgerufenen Korrelatorwerte verhalten sich dann etwa proportional zum Verhältnis von Nutz- zu Störpegel. Für eine schmalbandige Dauerton-Störung auf einem der beiden Träger lassen sich die aus dem Nutzsignal resultierenden Korrelatorwerte des ungestörten Trägers bestimmen. Der Schwellwert S für die Bitentscheidung muß dann so gewählt werden, daß für ein bestimmtes Stör-/Nutzsignalverhältnis die übertragene Sequenz noch korrekt zurückgewonnen wird. Messungen haben gezeigt, daß hier mit einem Amplitudenverhältnis zwischen Stör- und Nutzsignal von etwa 4 gute Ergebnisse erzielt werden können. Der Gewinn gegenüber einer reinen Maximum-Bitentscheidung liegt hier bei 12 dB. Deutlich kleinere Schwellwerte erzielen bei reinen Einzelton-Störungen noch bessere Ergebnisse, können aber bei weniger schmalbandigen Störungen leichter versagen.

Zum Verhalten bei sog. weißem Rauschen:
Ein wichtiges Kriterium für die Qualität einer Methode zur Bitentscheidung ist die "Fehlalarm-Wahrscheinlichkeit", d. h. wie oft das System Störungen als Beginn einer Übertragung interpretiert. Bei weißem Rauschen sind die Wahrscheinlichkeiten für eine "1" und "0" bei der Maximum-Entscheidung gleich groß. Abhängig von der Länge der Präambel ergibt sich daraus eine bestimmte Wahrscheinlichkeit für einen solchen Fehlalarm. Da in weißem Rauschen beide Trägerfrequenzen gleich stark vertreten sind, ergeben sich für beide Träger relativ große Korrelatorwerte. Damit liefert die Einzelträgerauswertung für beide Träger einen konstanten Bitstrom (dauerhaft "0" bzw. "dauerhaft "1"). Es kommt hier durch diese zusätzliche Auswertung zu keiner Erhöhung der Fehlalarm-Wahrscheinlichkeit und damit auch nicht zu einer stärkeren Belastung des Systems.

## Patentansprüche

1. Verfahren zur Demodulation von mittels zweier Trägerfrequenzen (f1, f2) FSK-modulierten Signalen im Rahmen eines Systems zur Übertragung von Datentelegrammen (Bit-Sequenzen) über Leitungen eines Niederspannungsnetzes, z.B. 230-V-Netzes, wobei
a) nach analoger Signalaufbereitung eines Empfangssignals eine digitale Korrelation durchgeführt wird, wobei ein erster Korrelatorwert (K1) für die erste Trägerfrequenz (f1) und ein zweiter Korrelatorwert (K2) für die zweite Trägerfrequenz (f2) gebildet werden,
b) durch Vergleich der Korrelatorwerte (K1, K2) eine Bit-Entscheidung (0- oder 1-Bit) getroffen wird, wodurch ein erster Datenbitstrom (DB1) entsteht,
c) zusätzlich die Korrelatorwerte (K1, K2) einzeln jeweils mit einem wählbaren festen Schwellwert (S) verglichen werden, wodurch ein zweiter und ein dritter Datenbitsirom (DB2, DB3) entstehen, und
d) alle drei Datenbitströme (DB1,DB2,DB3) auf charakteristische Telegramm-Merkmale, wie Präambel und Prüfsumme untersucht werden, und derjenige Datenbitstrom (DB1 oder DB2 oder DB3), dessen Charakteristik die beste Übereinstimmung mit der erwarteten Charakteristik aufweist, als empfangener Datenbitstrom (D) einer weiteren Auswertung zugeführt oder ausgegeben wird.

2. Verfahren nach Anspruch 1, dadurch gekennzeichnet, daß in einem Übertragungssystem mit automatischer Regelung der Empfangssignalverstärkung der Schwellwert (S) für die Bit-Entscheidung (0- oder 1-Bit) so gewählt wird, daß bei einem bestimmten Verhältnis von Störsignal zu Nutzsignal, insbesondere bei einem Amplitudenverhältnis von 4 zwischen Stör- und Nutzsignal, die übertragene Bitsequenz gerade noch korrekt zurückgewonnen wird.
